# EUROPÄISCHE PATENTSCHRIFT

(11) **EP 0 345 860 B1**
(45) Veröffentlichungstag und Bekanntmachung des Hinweises auf die Patenterteilung: **23.02.1994**
(21) Anmeldenummer: 89201353.3
(22) Anmeldetag: 29.05.1989
(51) Int. Cl.: G11B 15/10, G11B 15/675

(54) **Magnetbandkassettengerät mit einem zum Abspielen von Magnetbandkassetten dienenden Laufwerk**
Magnetic-tape cassette apparatus with a magnetic-tape reproducing drive
Appareil à cassettes à bande magnétique avec un mécanisme d'entraînement pour la lecture d'une cassette à bande magnétique

(30) Priorität: 04.06.1988 DE 3819096
(43) Veröffentlichungstag der Anmeldung: 13.12.1989
(73) Patentinhaber: Philips Patentverwaltung GmbH, 22335 Hamburg (DE); Philips Electronics N.V., 5621 BA Eindhoven (NL)
(72) Erfinder: Kunze, Norbert, D-6332 Ehringshausen (DE)
(74) Vertreter: Kupfermann, Fritz-Joachim, Dipl.-Ing.

(56) Entgegenhaltungen:
- EP-A- 0 052 393
- EP-A- 0 121 283
- EP-A- 0 219 921
- DE-A- 3 229 894
- DE-A- 3 411 138
- GB-A- 2 194 665
- US-A- 4 723 236

## Beschreibung

Die Erfindung bezieht sich auf ein Magnetbandgerät mit einem zum Abspielen von Magnetbandkassetten dienenden Laufwerk, das über Bedienungsstangen zu betätigen ist und einen Lademechanismus aufweist, der vermittels einer Betätigungsstange, eines Lifthebels und eines Betätigungshebels die Magnetbandkassette in eine Spielposition einziehen und absenken und in eine Ausnehmposition anheben und ausschieben kann, wobei ein Mitnehmer der Betätigungsstange, der eine Schwenkkulisse des Betätigungshebels befährt, den Betätigungshebel unter der Mitwirkung einer Anschiebe-Feder in die Ausnehmposition ausschwenkt, wenn die Kulisse diese Schwenkbewegung freigibt und, wobei der Lifthebel mit einem Fahrstift eine Liftkulisse der Betätigungsstange abfährt, um den Lifthebel nach Maßgabe der Liftkulisse beim Verstellen der Betätigungsstange abzusenken oder anzuheben.

Ein solches Magnetbandgerät ist aus der DE-PS 33 12 136 bekannt. Das Laufwerk läßt sich bedienen mit Hilfe von drei Bedienungsstangen, von denen eine Stange eine Auswurffunktion und zwei Stangen Schnellauffunktionen ausüben können. Die Bedienung der Bedienungsstangen erfolgt von Hand. Es ist ein Lademechanismus vorgesehen, der einen Kassettenschacht aufweist, der in eine Spielposition absenkbar und in eine Ausnehmposition anhebbar ist. Das Absenken und Anheben erfolgt mit Hilfe einer Liftkulisse an der Betätigungsstange. Die Steuerung des Anhebens und Absenkens erfolgt über einen Lifthebel, der mit einem Fahrstift die Liftkulisse der Betätigungsstange abfährt. Weiterhin ist ein Betätigungshebel vorgesehen, der eine Schwenkkulisse aufweist, die von einem Mitnehmerstift der Betätigungsstange abgefahren wird. Wird eine Magnetbandkassette in den in Ausnehmposition befindlichen Kassettenschacht eingeschoben, dann greift ein am Betätigungshebel gelagerter Kassettenhalter in ein Wickelloch der Magnetbandkassette. Die Magnetbandkassette nimmt den Kassettenhalter dann in Einschubrichtung mit und schwenkt den Betätigungshebel im Uhrzeigersinn in eine Position, die er während des Spielbetriebes einnimmt. Während dieses Schwenkens wird der Mitnehmerstift der Betätigungsstange von der Schwenkkulisse des Betätigungshebels freigegeben und eine Auswurffeder schiebt die Betätigungsstange nach vorn. Dieses Nachvornbewegen führt dazu, daß der Fahrstift des Lifthebels in der Kulisse schräg nach unten laufen kann, womit der Lifthebel um seine Drehachse schwenkt und mit seinem vorderen Ende den Kassettenschacht in die Spielposition absenkt.

Die Ausfahrbewegung der Betätigungsstange wird mit Hilfe einer Übertotpunktfeder erreicht. Beim Einschieben der Betätigungsstange zum Zwecke des Anhebens des Kassettenschachtes läuft der Fahrstift des Lifthebels relativ schwer in der Liftkulisse hoch. Die Schwergängigkeit wird ebenso größer, je steiler die Liftkulisse angelegt ist.

Es ist Aufgabe der Erfindung, den Lademechanismus des Magnetbandgerätes bei der Auswerfbewegung leichtgängiger zu machen, bei Verkürzung des Weges der Betätigungsstange.

Die gestellte Aufgabe ist erfindungsgemäß dadurch gelöst, daß die Ausschiebefeder mit einem ihrer auseinanderspreizenden Endschenkel den Betätigungshebel in Ausschwenkrichtung und mit ihrem anderen Endschenkel den Lifthebel in Anheberichtung belastet.

Da die Lift- bzw. Anhebebewegung des Lifthebels und die Auswerfbewegung des Betätigungshebels durch die Ausdrückfeder unterstützt wird, geleitet der Fahrstift leichter in der Liftkulisse hoch. Dieses erleichterte Hochdrücken ermöglicht eine steilere Führung der Liftkulisse und damit eine Verkürzung des Ausfahrweges der Betätigungsstange.

Nach einer weiteren Ausgestaltung der Erfindung ist vorgesehen, daß die Ausschiebefeder eine Wendelfeder ist, die auf einem Drehzapfen des Lifthebels angeordnet ist. Eine solche Wendelfeder mit einer Mehrzahl von Windungen ergibt innerhalb der jeweiligen Bewegungsbereiche nahezu gleichbleibende Andruckkräfte auf Betätigungshebel und Lifthebel.

Nach einer weiteren Ausgestaltung der Erfindung ist vorgesehen, daß die Bedienungsstangen mit Mitnehmerarmen in eine Ausnehmung der Betätigungsstange eingreifen, so daß jeder der Mitnehmerarme bei einer Ausfahrbewegung der jeweiligen Bedienungsstange die Betätigungsstange in Ausfahrtrichtung mitnimmt, falls diese nicht ausgefahren ist.

Die Erfindung wird anhand der Zeichnung näher erläutert. Es zeigen:
Fig. 1 das Laufwerk eines Magnetbandkassettengerätes mit Kassettenschacht, Lifthebel, Betätigungshebel und Betätigungsstange,
Fig. 2 einen Ausschnitt aus dem Gerät, der das Zusammenwirken von Lifthebel, Betätigungshebel und Betätigungsstange in der Spielposition darstellt,
Fig. 3 den Ausschnitt nach Fig. 2 in der Ausnehmstellung,
Fig. 4 eine Seitenansicht des Ausschnittes nach Fig. 3.

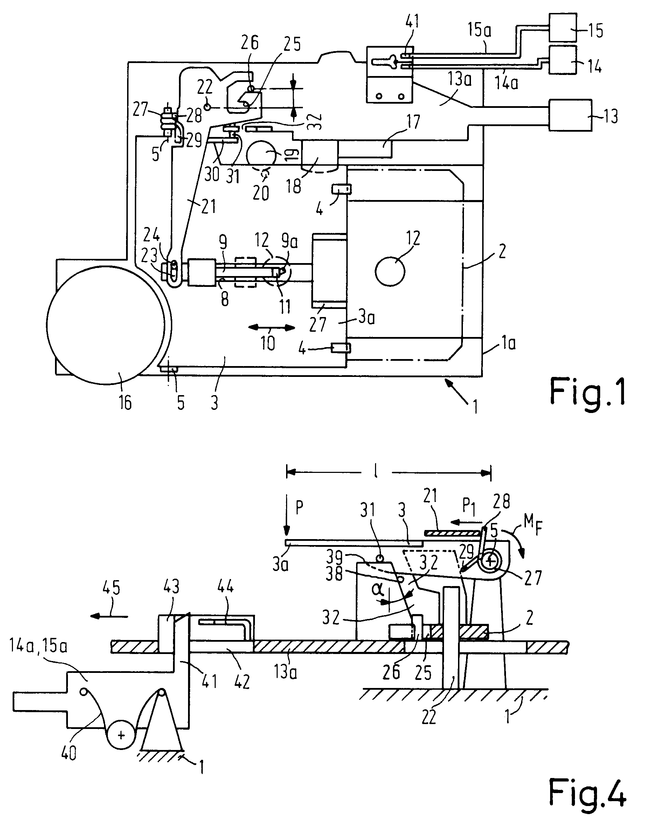

Das in Fig. 1 vereinfacht dargestellte Magnetbandkassettengerät 1 weist einen Kassettenschacht 1a auf, in den eine Kompaktkassette 2 eingeschoben ist. Der Kassettenschacht 1a ist senkrecht zur Zeichenebene absenkbar mit Hilfe eines Lifthebels 3, der mit seinem vorderen Ende 3a unter Überwurflaschen 4 des Kassettenschachtes 1a greift. Der Lifthebel 3 ist um eine Achse 5 verschwenkbar. In dem Lifthebel 3 befindet sich eine Schlitzführung 8, in der ein streifenförmiger Kassettenhalter 9 in Richtung eines Doppelpfeiles 10 verschieblich ist. Der Kassettenhalter 9 ist an seinem vorderen Ende 9a mit einer Nase 11 versehen, die in ein Wickelloch 12 der Magnetbandkassette 2 eingefallen ist. Zum Durchführen der Laufwerksfunktionen sind eine Betätigungstaste 13 mit einer Betätigungsstange 13a und zwei Bedienungsstangen 14a, 15a mit Bedienungsknöpfen 14, 15 vorgesehen.

Es ist eine Kopfplatte 17 vorgesehen, auf der ein Magnetkopf 18 und eine Andruckrolle 19 angeordnet sind. Die Andruckrolle 19 arbeitet mit einer Tonwelle 20 zusammen.

Weiterhin ist ein Betätigungshebel 21 vorgesehen, der um eine Achse 22 verschwenkbar ist. Der Betätigungshebel 21 greift an seinem freien Ende mit einem Schlitz 23 über einen Zapfen 24 des Kassettenhalters 9. Die Nase 11 des Kassettenhalters 9 greift dabei in eines der Wickellöcher 12 der Kassette ein. In dieser Stellung des Betätigungshebels ist der Kassettenschacht 1a abgesenkt in seine Spielstellung.

Der Betätigungshebel weist eine Schwenkkulisse 25 auf, die von einem Mitnehmer 26 der Betätigungsstange 13a abgefahren wird. Auf die Achse 5 ist eine Wendelfeder 27 aufgesteckt, die Endschenkel 28, 29 aufweist. Der eine Endschenkel 28 drückt gegen den Betätigungshebel 21, um ihn entgegen dem Uhrzeigersinn in die Ausschiebstellung zu verdrehen. Der andere Endschenkel 29 drückt unter den Lifthebel 3.

Der Lifthebel 3 weist einen Ansatz 30 auf, an dem ein Fahrstift 31 angeordnet ist. Dieser Fahrstift 31 kann in eine zur Vertikalen geneigte Liftkulisse 32 einfahren, die an der Betätigungsstange vorgesehen ist. Über ihn ist der Lifthebel um die Achse 5 mit seinem freien Ende 3a hochschwenkbar und absenkbar.

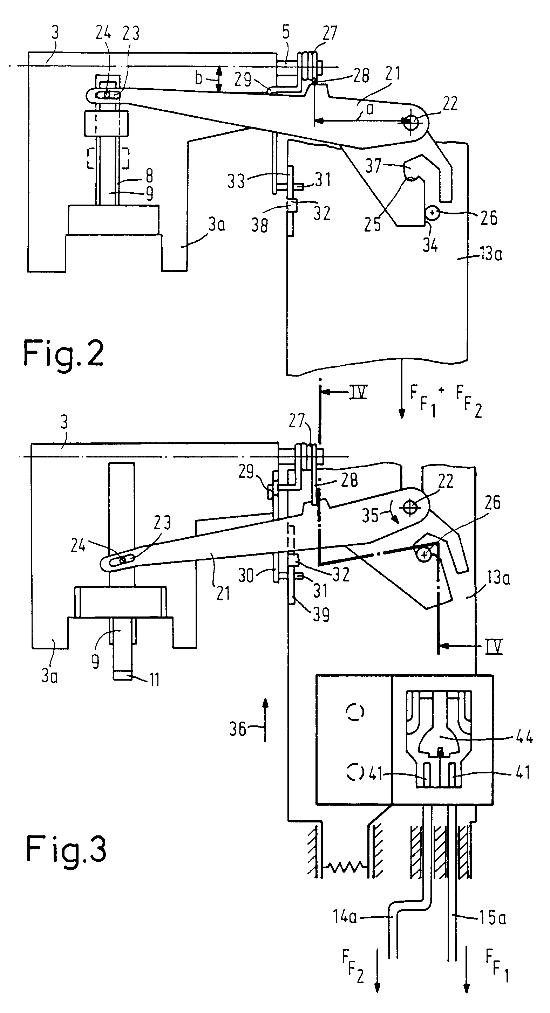

Fig. 2 zeigt einen Ausschnitt des Laufwerkes nach Fig. 1 mit einer vergrößerten Darstellung von Betätigungsstange 13a, Betätigungshebel 21 und Lifthebel 3 bei ihrem gegenseitigen Zusammenwirken. Das vordere Ende 3a des Lifthebels 3 ist niedergeschwenkt, weil der Fahrstift 31 in der Kulisse 32 in die Zeichenebene hineingefahren und unter eine Kulissenwand 33 gerutscht ist. Der Endschenkel 28 der Wendelfeder 27 drückt gegen den Betätigungshebel 21 in einem Abstand von der Achse, der in Fig. 2 mit a bezeichnet ist. Der andere Endschenkel 29 drückt unter den Lifthebel 3 in einem Abstand b von der Achse 5. Der Mitnehmer 26 auf der Betätigungsstange 13a liegt auf einer Rampe 34 der Kulisse 25 des Betätigungshebels 21 auf.

Fig. 3 zeigt eine Stellung des Lademechanismus, wobei der Betätigungshebel 21 in Richtung eines Pfeiles 35 verschwenkt ist. Der Schlitz 23 hat den Zapfen 24 dabei mitgenommen und den Kassettenhalter 9 in die Ausnehmposition vorgeschoben. Dieses wurde möglich, da die Betätigungsstange 13a in Richtung eines Pfeiles 36 eingeschobenwurde und der Mitnehmer 26 in die Vertiefung 37 der Schwenkkulisse 25 einfallen konnte. Durch dieses Einfallen des Mitnehmers 26 in die Mulde 37 wurde der Betätigungshebel 2 zum Verschwenken in Richtung des Pfeiles 35 freigegeben. Die Verschwenkung wurde verursacht von dem Endschenkel 28 der Wendelfeder 27. Zugleich mit dem Einschieben der Betätigungsstange 13a ist der Fahrstift 31 auf einer schrägen Rampe 38 der Liftkulisse 32 hochgehoben worden. Er liegt bei der Darstellung nach Fig. 3 auf einer oberen Auflage 39 der Liftkulisse 32. Der Aufbau der Liftkulisse 32 ergibt sich deutlicher aus Fig. 4.

Der andere Endschenkel 29 der Wendelfeder 27 hat das Hochfahren des Fahrstiftes 31 durch seine Federkraft unterstützt. Bei diesem Hochfahren ist das vordere Ende 3a des Lifthebels 3 hochgeschwenkt und der Lifthebel 3 hat damit den aus Fig. 1 zu erkennenden Kassettenschacht 1a in die Ausnehmposition hochgehoben.

Fig. 3 zeigt die Bewegungsunterstützung des Hochhebens des Kassettenschachtes 1a und des Verschwenkens des Betätigungshebels 21 durch die Bedienungsstangen 14a und 15a. Beide Bedienungsstangen sind mit Hilfe von aus Fig. 4 zu ersehenden Federn in Ausfahrrichtung belastet. An den Bedienungsstangen 14a und 15a sind Mitnehmerarme 41 vorgesehen. Diese Mitnehmerarme 41 greifen durch einen Durchbruch 42 in der Betätigungsstange 13a und dort beispielsweise in einen Schaltkasten 43 auf der Betätigungsstange 13a ein, in dem sich ein mit dem Schaltkasten verschwenkbarer Arm 44 befindet, der ein gleichzeitiges Einschieben beider Tastenstangen 14a und 15a verhindert. Die Federn 40 belasten die Betätigungsstange 13a in der Auswerfrichtung mit den Kräften F_{F1} + F_{F2}. In Fig. 2 sind die Kräfte als gemeinsam wirkend dargestellt. Beide Federn 40 sorgen damit dafür, daß die Betätigungsstange 13a immer in Ausfahrrichtung federbelastet ist.

Fig. 4 zeigt anhand eines Teilschnittes IV in Fig. 3 das Zusammenwirken der einzelnen Bauteile in dem Status nach Fig. 3. Man erkennt die Achse 22, um die der Betätigungshebel 21 verschwenkbar ist. Der Mitnehmer 26, der an der Betätigungsstange 13a befestigt ist, liegt in der Mulde 37 der Schwenkkulisse 25. Der Fahrstift 31 ist in der Liftkulisse 32 über die Rampe 38 auf die Auflage 39 aufgelaufen. Das vordere Ende 3a des Lifthebels 3 ist in der Horizontallage hochgeschwenkt und hat den Kassettenschacht 1a mit hochgehoben. Der eine Endschenkel 28 der Wendelfeder 27 hat den Betätigungshebel 21 in Richtung des Pfeiles 35 verschwenkt und der andere Endschenkel 29 hat das Hochschieben des Fahrstiftes 31 auf der Rampe 38 unterstützt.

Aus Fig. 4 ist auch zu erkennen, wie die Mitnehmerarme 41 gegen den Schaltkasten 43 drücken und die Bedienungsstangen 14a, 15a die Betätigungsstange 13a in Auswerfrichtung 45 belasten.

Das Drehmoment M_{F} der Wendelfeder 27 ist größer als die Kraft P mal der Länge L des Hebelarmes des Lifthebels zwischen seiner Achse 5 und dem Angriffspunkt des vorderen Lifthebelendes 3a an dem Kassettenschacht 1a. Die Kraft P ist die Gewichtskraft aus der Kassette und dem Schacht. Die in Fig. 4 angegebene Kraft P₁ ist die Ausschiebekraft, die auf die Kassette vom Betätigungshebel 21 ausgeübt werden muß.

Der Steigungswinkel Alpha der Rampe 38 der Liftkulisse 32 kann infolge der Anhebeunterstützung durch die Feder 27 verkleinert werden, was eine Verkürzung des Ausschiebeweges der Betätigungsstange 13a zur Folge hat.

## Patentansprüche

1. Magnetbandkassettengerät (1) mit einem zum Abspielen von Magnetbandkassetten dienenden Laufwerk, das über Bedienungsstangen (14a, 15a) zu betätigen ist und einen Lademechanismus aufweist, der vermittels einer Betätigungsstange (13a), eines Lifthebels (3) und eines Betätigungshebels (21) die Magnetbandkassette (2) in eine Spielposition einziehen und absenken und in eine Ausnehmposition anheben und ausschieben kann, wobei ein Mitnehmer (26) der Betätigungsstange (13a), der eine Schwenkkulisse (25) des Betätigungshebels (21) abfährt, den Betätigungshebel (21) unter der Mitwirkung einer Ausschiebe-Feder (27) in die Ausnehmposition ausschwenkt, wenn die Kulisse 25 diese Schwenkbewegung freigibt, und wobei der Lifthebel 3 mit einem Fahrstift (31) eine Liftkulisse (32) der Betätigungsstange (13a) abfährt, um den Lifthebel (3) nach Maßgabe der Liftkulisse (32) beim Verstellen der Betätigungsstange (13a) abzusenken oder anzuheben,
dadurch gekennzeichnet, daß die Ausschiebe-Feder (27) mit einem ihrer auseinanderspreizenden Endschenkel (28) den Betätigungshebel (21) in Ausschwenkrichtung und mit ihrem anderen Endschenkel (29) den Lifthebel (3) in Anheberichtung belastet.

2. Magnetbandkassettengerät nach Anspruch 1,
dadurch gekennzeichnet, daß die Ausschiebe-Feder (27) eine Wendelfeder ist, die auf einem Drehzapfen (5) desLifthebels (3) angeordnet ist.

3. Magnetbandkassettengerät nach Anspruch 1, bei dem parallel zur Betätigungsstange (13a) hochschwenkbare Bedienungsstangen (14a, 15a) angeordnet sind, die mittels Federn 40 in Ausfahrrichtung belastet sind,
dadurch gekennzeichnet, daß die Bedienungsstangen (14a, 15a) mit Mitnehmerarmen (41) in eine Ausnehmung (42) der Betätigungsstange (13a) derart eingreifen, daß jeder der Mitnehmerarme (41) bei einer Ausfahrbewegung der jeweiligen Bedienungsstange (14a, 15a) die Betätigungsstange (13a) in Ausfahrtrichtung mitnimmt, falls diese nicht ausgefahren ist.

## Claims

1. A magnetic-tape-cassette apparatus (1) comprising a deck for playing magnetic-tape cassettes, which deck is constructed to be actuated *via* actuating rods (13a-15a) and comprises a loading mechanism capable of drawing in and lowering the magnetic-tape cassette (2) into a play position and of lifting said cassette into an unloading position and ejecting it, by means of an actuating member (13a), a lift lever (3) and an actuating lever (21), a follower (26) of the actuating member (13a), which follower cooperates with a pivoting guide (25) of the actuating lever (21), pivoting the actuating lever (21) into the unloading position with the aid of an ejection spring (27) when the guide 25 enables said pivotal movement to be performed, and a follower pin (31) of the lift lever (3) cooperating with a lift guide (32) of the actuating member (13a) to lower or to lift the lift lever (3) under control of the lift guide (32) during actuation of the actuating member (13a),
characterized in that the ejection spring (27) loads the actuating lever (21) in the ejection direction with one of its expanding legs (28) and biases the lift lever (3) in the lifting direction with its other leg (29).

2. A magnetic-tape-cassette apparatus as claimed in Claim 1,
characterized in that the ejection spring (27) is a helical spring arranged on a pivotal spindle (5) of the lift lever (3).

3. A magnetic tape cassette apparatus as claimed in Claim 1, in which actuating rods (14a, 15a) are arranged parallel to the actuating member (13a) and are biased in the outward direction by means of springs (40),
characterized in that coupling arms (41) of the actuating rods (14a, 15a) engage in a recess (42) in the actuating member (13a) in such a way that during an outward movement of the relevant actuating rod (14a, 15a), if it is not yet in its outer position, each of the coupling arms (41) moves the actuating member (13a) in the outward direction.

## Revendications

1. Appareil à bande magnétique (1) équipé d'un mécanisme d'entraînement pour la lecture de cassettes de bande magnétique, qui peut être actionné par des tiges de manoeuvre (14a, 15a) et comporte un mécanisme de chargement qui peut, par le biais d'une tige d'actionnement (13a), d'un levier de levage (3) et d'un levier d'actionnement (21), introduire et faire descendre la cassette de bande magnétique en position de lecture et la faire remonter et l'éjecter en position d'extraction, un élément d'entraînement (26) de la tige d'actionnement (13a), qui déplace une coulisse de pivotement (25) du levier d'actionnement (21), faisant pivoter le levier d'actionnement (21) avec l'assistance d'un ressort de pression (27), vers la position d'extraction lorsque la coulisse (25) libère ce mouvement de pivotement et le levier de levage (3) déplaçant par un ergot de translation (31) une coulisse de levage (32) de la tige d'actionnement (13a) pour faire descendre ou monter le levier de levage (3) en fonction de la coulisse de levage (32) lors du déplacement de la tige d'actionnement (13a), caractérisé en ce que le ressort de pression (27) sollicite le levier d'actionnement (21) dans la direction de pivotement par une (28) de ses branches terminales s'écartant l'une de l'autre et le levier de levage (3) dans la direction de levage par son autre branche terminale (29).

2. Appareil à cassette de bande magnétique selon la revendication 1, caractérisé en ce que le ressort de pression (27) est un ressort de torsion agencé sur un pivot (5) du levier de levage (3).

3. Appareil à cassette de bande magnétique selon la revendication 1, dans lequel parallèlement à la tige d'actionnement (13a) sont agencées des tiges d'actionnement (14a, 15a) pouvant pivoter vers le haut, qui sont sollicitées par des ressorts (40) dans le sens de sortie, caractérisé en ce que les tiges de manoeuvre (14a, 15a) sont en prise par des bras d'entraînement (41) avec un évidement (42) de la tige d'actionnement (13a), de telle sorte que chacun des bras d'entraînement (41) entraîne, au cours d'un déplacement de sortie de la tige de manoeuvre (14a, 15a) respective, la tige d'actionnement (13a) dans la direction de sortie, au cas où cette tige n'est pas sortie.
